# EUROPEAN PATENT SPECIFICATION

(11) **EP 4 425 664 B1**
(45) Date of publication and mention of the grant of the patent: **29.07.2026**
(21) Application number: 23872999.0
(22) Date of filing: 25.09.2023
(51) Int. Cl.: H01M 10/658, H01M 50/24, H01M 50/503, H01M 50/567, H01M 50/296, H01M 50/507, H01M 50/517, H01M 50/526, H01M 50/591, H01M 50/271, H01M 50/505, H01M 50/209, H01M 50/502, H01M 50/543

(54) **BATTERY MODULE WITH IMPROVED HEAT PROPAGATION PREVENTION STRUCTURE**
BATTERIEMODUL MIT VERBESSERTER STRUKTUR ZUR VERHINDERUNG VON WÄRMEAUSBREITUNG
MODULE DE BATTERIE AYANT UNE STRUCTURE AMÉLIORÉE POUR EMPÊCHER LA
PROPAGATION THERMIQUE

(30) Priority: 29.09.2022 KR 20220124004
(43) Date of publication of application: 04.09.2024
(73) Proprietor: LG Energy Solution, Ltd., Seoul 07335 (KR)
(72) Inventor: KIM, Dae Gil, Daejeon 34122 (KR); CHOI, Jong Hwa, Daejeon 34122 (KR); LIM, Chae Won, Daejeon 34122 (KR); LEE, Hyoung Suk, Daejeon 34122 (KR)
(74) Representative: Plasseraud IP
(86) International application number: PCT/KR2023/014601
(87) International publication number: WO 2024/071882

(56) References cited:
- JP-A- 2014 139 895
- KR-A- 20200 102 292
- KR-A- 20220 043 543
- KR-A- 20220 109 057
- KR-A- 20220 118 636
- KR-A- 20220 126 441
- US-A1- 2022 262 539
- US-A1- 2022 294 075

## Description

### [Technical Field]

The present invention relates to a battery module, which is capable of effectively preventing the thermal propagation of thermal runaway occurring in a battery cell within the battery module to other surrounding battery modules.

### [Background Technology of the Invention]

Unlike primary batteries, secondary batteries can be recharged, and they have been heavily researched and developed in recent years due to their potential for miniaturization and large capacity. The demand for secondary batteries as an energy source is increasing rapidly due to the technological development and increasing demand for mobile devices, electric vehicles, and energy storage systems, which are emerging in response to the need for environmental protection.

Secondary batteries are categorized into coin-type cells, cylindrical cells, prismatic cells, and pouch-type cells based on the shape of the cell case. In a secondary battery, an electrode assembly mounted inside the battery case is a chargeable/dischargeable power generator consisting of a laminated structure of electrodes and separators.

Since secondary batteries are required for continuous use over a long period, it is necessary to effectively control the heat generated during the charging and discharging process. If the cooling of the secondary battery is not carried out smoothly, the temperature rise can lead to an increase in current, and the increase in current causes the temperature to rise again, creating a feedback chain reaction that eventually leads to the catastrophic condition of thermal runaway.

Additionally, when secondary batteries form a group in the form of modules or packs, the occurrence of thermal runaway in one secondary battery can lead to a thermal propagation phenomenon where the surrounding batteries get successively overheated. That is, when thermal runaway occurs in a battery module within the battery pack, a large amount of conductive dust, gas, and flames are emitted from the high-voltage terminals of the battery module. As a result, dust accumulates on the high-voltage terminals of other neighboring battery modules, and heat transfer by gas and flame triggers the phenomenon of thermal propagation.

To prevent this thermal propagation, measures were taken to add a flame-retardant thermal barrier to prevent the transfer of ejecta and high heat to adjacent battery modules. However, there has been a problem in that the thermal barrier often gets dislocated from its proper position due to the high-temperature, high-pressure substances ejected from the battery module, thus failing to function effectively.

Example of a battery module with an anti-inflammatory cover can be found in US 2022/294075 A1.

### [Description of the Invention]

### [Technical Problem]

The present invention aims to provide a battery module that can more effectively block conductive dust, gases, and flames that are emitted in large quantities from high-voltage terminals by keeping the thermal barrier firmly in place in the event of thermal runaway in the battery module.

However, the technical problems to be solved by the present invention are not limited to the above-described problem, and other problems not mentioned can be clearly understood by those skilled in the art from the following description of the present invention.

### [Technical Solution]

The present invention relates to a battery module according to claim 1.

Additionally, the thermal barrier may form a bent shape that wraps around an upper surface and a front surface of the pair of high-voltage terminals.

Furthermore, a width of the thermal barrier may correspond to a front width of the module housing.

Additionally, a heat-resistant silicone may be applied to a contact surface between the thermal barrier and the module housing.

In another exemplary embodiment of the invention, the battery module further includes a busbar, and a busbar cover that wraps around the busbar, wherein ends of the busbar are mechanically fixed to the pair of high-voltage terminals of adjacent module housing, respectively.

The busbar cover may include a lower busbar cover in which the busbar is seated, and is provided with a connection hole exposing the busbar to the pair of high-voltage terminals; and an upper busbar cover for wrapping around the busbar in combination with the lower busbar cover, and is provided with a pair of cover fastening holes corresponding to the module lifting holes.

Furthermore, the lower busbar cover and the upper busbar cover may be mutually coupled by a hook structure.

Additionally, it may be preferable for the thermal barrier to wrap around the busbar cover.

Here, each fastening member may be fastened to a respective module lifting hole through a respective fastening hole in the thermal barrier and through a respective cover fastening hole in the busbar cover.

Such a fastening member may be a nut inserted into the interior of the module lifting rib, and a bolt threaded to the nut through the respective fastening hole in the thermal barrier, through the respective cover fastening hole, and through the respective module lifting hole.

Additionally, around each of the pair of fastening holes in the thermal barrier, a concave stepped surface may be formed corresponding to the step formed by a respective one of the pair of module lifting ribs relative to the upper surface of the module housing.

### [Advantageous Effects]

The battery module of the present invention with the above configuration can mechanically secure the thermal barrier by utilizing the module lifting holes already provided in the module housing for handling heavy battery modules. Thus, even if a thermal runaway occurs in the battery module and a large amount of spillage from the high-voltage terminals occurs, the thermal barrier may remain firmly in place, effectively blocking or delaying heat propagation to other battery modules in the vicinity.

Furthermore, by protecting the high-voltage terminals and busbar with a flame-retardant cover, the battery module of the present invention enables even more effective prevention of heat propagation.

However, the technical effects that can be obtained through the present invention are not limited to those described above, and other effects not mentioned will be apparent to one of ordinary skill in the art from the following description of the invention.

### [Brief Description of the Drawings]

The following drawings accompanying this specification illustrate preferred exemplary embodiments of the present invention and are intended to serve as a further understanding of the technical ideas of the present invention in conjunction with the detailed description of the invention that follows, so the present invention is not to be construed as limited to what is shown in such drawings.
FIG. 1 drawing illustrating an example of a battery pack with a plurality of battery modules of the present invention mounted.
FIG. 2 is a drawing illustrating a battery module without a thermal barrier.
FIG. 3 is an enlarged front view of a battery housing where a thermal barrier is mounted.
FIG. 4 is an exploded perspective view illustrating a mounting structure of a thermal barrier.
FIG. 5 is a drawing illustrating a battery module with a thermal barrier mounted.
FIG. 6 is a drawing illustrating a busbar cover provided in another exemplary embodiment of the present invention.
FIG. 7 is a drawing illustrating the structure in which a busbar cover is mounted on a battery module.
FIG. 8 is a drawing illustrating a battery module including a thermal barrier and a busbar cover.
FIG. 9 is a cross-sectional view cut along line "A-A" of FIG. 8.
FIG. 10 is a drawing illustrating another exemplary embodiment of the thermal barrier.

### [Best Mode for Invention]

The present invention may have various modifications and various examples, and specific examples are illustrated in the drawings and described in detail in the description.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present invention relates to a battery module which, in one example, includes a module housing accommodating a plurality of battery cells; a pair of high-voltage terminals provided on the front of the module housing; a pair of module lifting holes provided between the high-voltage terminals; a thermal barrier that wraps around part of the front of the module housing including the high-voltage terminals, with fastening holes penetrating through its upper surface; and a fastening member installed by penetrating through the module lifting hole and fastening hole to secure the thermal barrier to the module lifting hole.

With this configuration, the battery module of the present invention can mechanically fix the thermal barrier by utilizing the module lifting holes already provided in the module housing for handling heavy battery modules. Thus, even if a thermal runaway occurs in the battery module and a large amount of spillage is generated from the high-voltage terminals, the thermal barrier can remain firmly in place, effectively blocking or delaying heat propagation to other battery modules in the vicinity.

### [Mode for Invention]

Hereinafter, specific embodiments of a pack case according to the present invention will be described in detail with reference to the accompanying drawings. For reference, the directions of front, back, up, down, left and right designating relative positions used in the following description are for the purpose of understanding the invention, and refer to the directions shown in the drawings unless otherwise specified.

### [First embodiment]

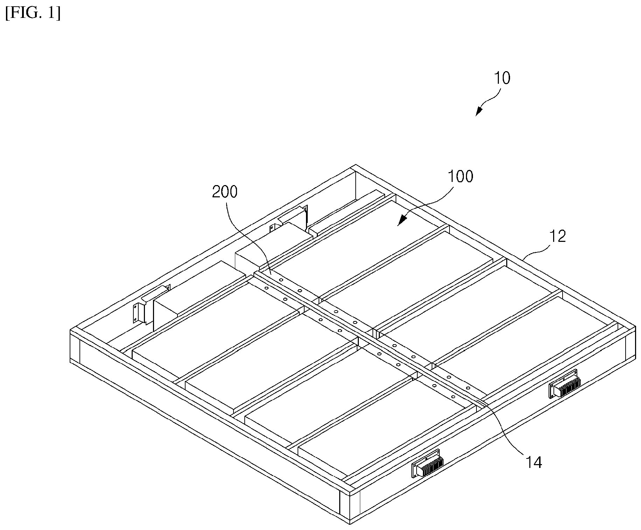

FIG. 1 is a drawing illustrating an example of a battery pack 10 in which a plurality of battery modules 100 of the present invention is mounted. The battery pack 10 includes a pack case 12 made into a framed structure that forms a space for accommodating the plurality of battery modules 100 while protecting the mounted battery modules 100 and ensuring structural rigidity of the battery pack 10. The battery pack 10, exemplarily shown in FIG. 1, has a total of eight battery modules 100 mounted on it, with the fronts of the battery modules 100 arranged to face toward a center frame 14 that runs across the center of the pack case 12. A high-voltage terminal 120 for connecting a busbar 500 is arranged on the front of the battery module 100, and a thermal barrier 200 for protecting it is mounted on the battery module 100.

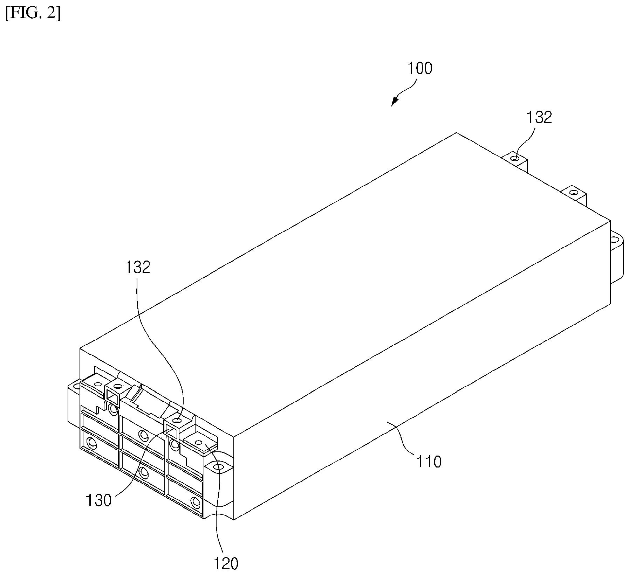

FIG. 2 illustrates one battery module 100 mounted on the battery pack 10 of FIG. 1, with the thermal barrier 200 shown in FIG. 1 omitted. The battery module 100 contains a plurality of battery cells (the battery cells inside are not shown in the drawing), and the plurality of battery cells are connected to each other in a series and/or parallel circuit such that charging and discharging occurs at a prescribed voltage and current. High-voltage terminals 120 are provided on the exterior of the battery module 100 as input and output terminals for the plurality of electrically connected battery cells.

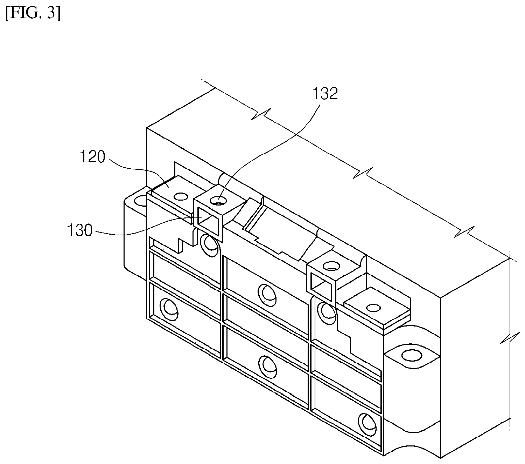

FIG. 3 is an enlarged view of the front of a module housing 110 in which a thermal barrier 200 is mounted. The module housing 110 is a portion of the body of the battery module 100 that accommodates a plurality of battery cells, and is provided with a pair of high-voltage terminals 120 on the front of the module housing 110.

Further, a pair of module lifting holes 132 are provided between the high-voltage terminals 120 consisting of positive electrode and negative electrode as a pair. Since the battery module 100 mounted with a plurality of battery cells can be quite heavy, a lifting device is utilized to perform storage or removal operations for the battery pack 10. For handling such a battery module 100, module lifting holes 132 are provided in the module housing 110, and for balance, a pair of module lifting holes 132 are provided at the front and rear of the module housing 110.

The thermal barrier 200 is a bulkhead member for blocking a large amount of conductive dust, gas, and flame that is emitted at high temperature and pressure toward the high-voltage terminal 120 in the event of a thermal runaway within the battery module 100. For this purpose, the thermal barrier 200 is shaped to wrap around a front portion of the module housing 110 and is made of a flame-retardant material that can withstand high temperatures, for example, a mica material. Furthermore, the upper surface of the thermal barrier 200 has a fastening hole 210 formed through it for fixing to the module housing 110.

The fixation of the thermal barrier 200 to the module housing 110 is accomplished by the fastening member 300, and conventionally, the thermal barrier 200 is fixed to the module housing 110 by attaching the thermal barrier 200 with an adhesive tape or heat-resistant silicone. Although the attachment method is simple, it has the disadvantage of insufficient fixing force of the thermal barrier 200, especially when the thermal barrier 200 is moved out of its position by a high-temperature/pressure spillage, thus it is difficult to trust the reliable blocking function. In comparison, in the present invention, the mechanical fixity of the thermal barrier 200 is greatly improved by the fastening member 300 being installed through the module lifting hole 132 and the fastening hole 210.

Referring to FIG. 3, module lifting holes 132 are formed in the upper surface of module lifting ribs 130, which forms an open space for the front of module housing 110 while forming a step relative to the upper surface of module housing 110. And, thermal barrier 200 has a bent shape that wraps around the upper surface and front surface of the high-voltage terminal 120. Both sides of the thermal barrier 200 are open for the withdrawal of the busbar 500, i.e., for the connection of the busbar 500 to other adjacent battery modules 100, but by wrapping around the upper surface and front surface of the high-voltage terminal 120, the emission and spread of spillage is prevented as much as possible. Further, it may be desirable for the width of the thermal barrier 200 to have a length corresponding to the front width of the module housing 110 to ensure maximum coverage area.

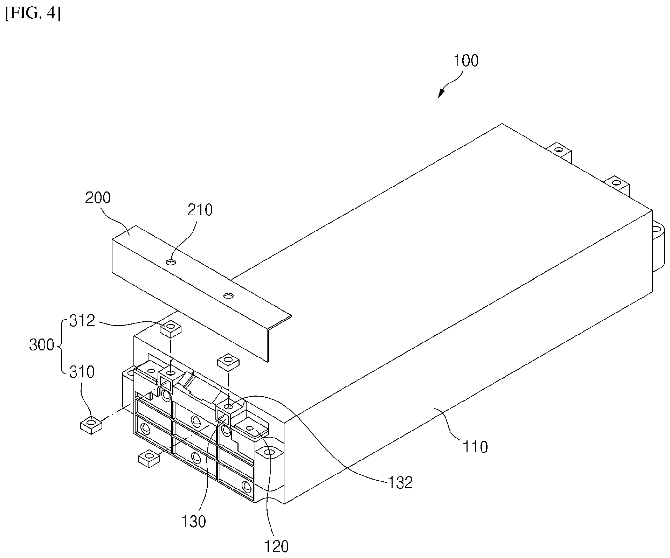

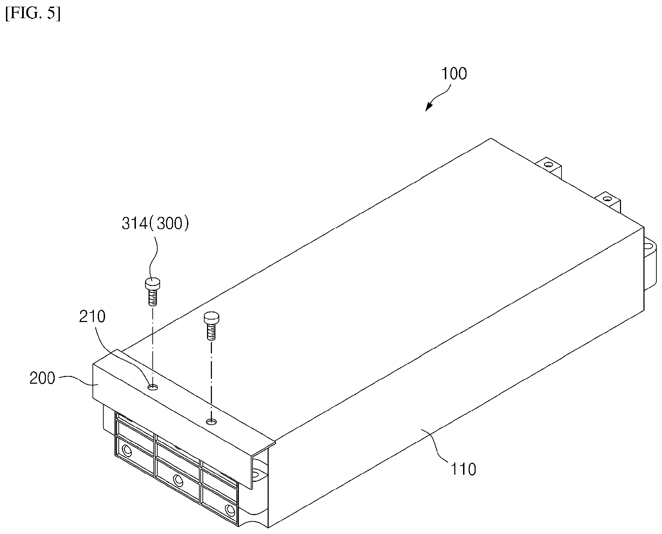

FIG. 4 is an exploded perspective view illustrating the mounting structure of the thermal barrier 200, and FIG. 5 is a drawing illustrating the battery module 100 with the thermal barrier 200 mounted. The module lifting ribs 130, in which the module lifting holes 132 are formed, form an open space relative to the front of the module housing 110, which allows for easy installation of a fastening member 300 even when the front and upper surface are blocked by the bent thermal barrier 200.

Referring to FIG. 4, the fastening member 300 includes a nut 310 that is inserted into the interior of the module lifting rib 130, a washer 312 disposed on the upper surface of the module lifting rib 130, a bolt 314 that threads through the fastening hole 210 and the washer 312 of the thermal barrier 200 and through the module lifting hole 132 to be screwed into the nut 310.

Here, the nut 310 is preferably installed on the interior of the module lifting rib 130 with a structure that does not rotate with the rotation of the bolt 314. For example, the nut 310 may be a square nut, and as the nut 310 is semi-fixedly installed on the interior of the module lifting rib 130, the torque of the bolt 314 is solely connected to the nut 310 by screw fastening. With this fastening structure, the fastening member 300 can be easily installed even when the module lifting hole 132 is blocked by the thermal barrier 200. Note that the nut 310 can also be a square nut, as shown in FIG. 4.

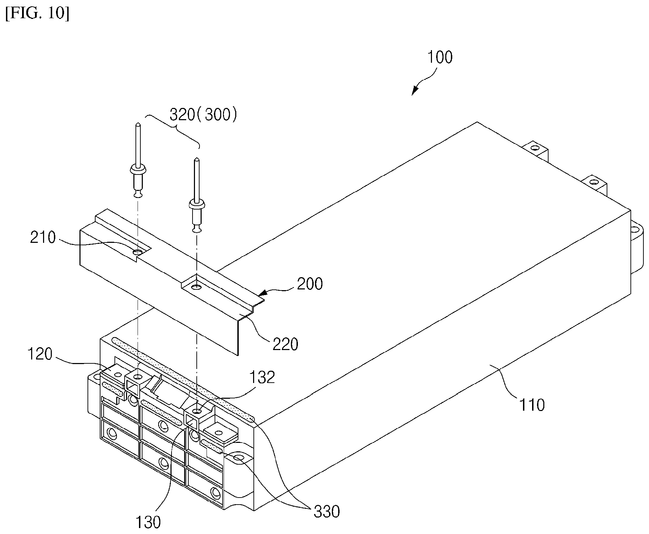

Alternatively, to reduce costs and improve processes by reducing the number of parts in the fastening member 300, the fastening member 300 may be configured with rivets 320 that are installed through the fastening holes 210 and module lifting holes 132 (see FIG. 10). For example, a nail-like rivet 320 may be driven through the fastening hole 210 and the module lifting hole 132, and then a rivet gun may be used to complete the rivet fastening. However, unlike the bolts 314 and nuts 310, the rivet fastening has the disadvantage that it cannot be repeatedly fastened and disassembled, so it may be desirable to select the appropriate fastening member 300 in consideration of the need for disassembly.

And, to provide additional assembly rigidity of the thermal barrier 200, the fastening member 300 may be engaged after the heat-resistant silicone 330 is applied to the contact surface of the thermal barrier 200 and the module housing 110 (see FIG. 10). The combination of the adhesion of the heat-resistant silicone 330 and the fastening force of the fastening member 300 ensures that the thermal barrier 200 is very firmly secured to the module housing 110.

### [Second embodiment]

A second embodiment of the present invention includes a busbar cover 400 to protect the busbar 500. Referring to FIG. 1, eight battery modules 100 are arranged with the faces of the eight battery modules facing toward a center frame 14 that runs across the center of the pack case 12, whereby the thermal barrier 200 is disposed side-by-side adjacent to the center frame 14.

As described above, both sides of the thermal barrier 200 are open for connection to the busbar 500, so that ejecta from a thermally runaway battery module 100 is effectively blocked for battery modules 100 beyond the center frame 14, but is less effective for battery modules 100 connected in series with the thermal barrier 200. The high-voltage terminals 120 and busbar 500 of adjacent battery modules 100 are susceptible to damage by a high-temperature ejecta, and thermal propagation by deposition of ejecta is also a concern.

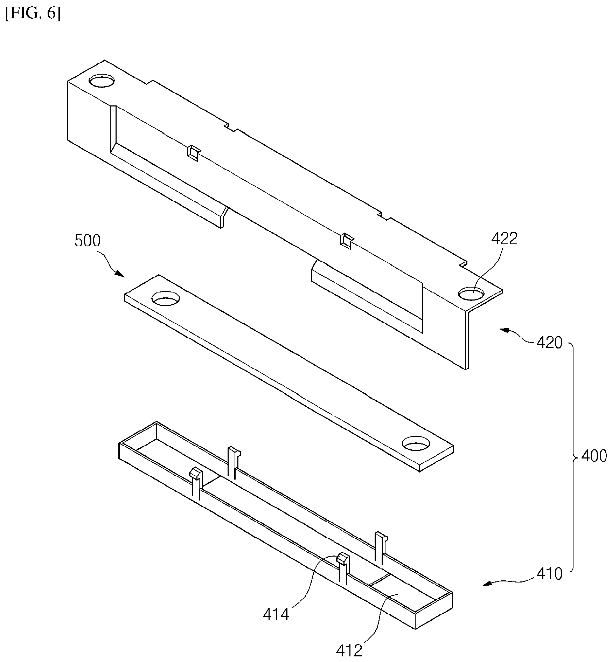

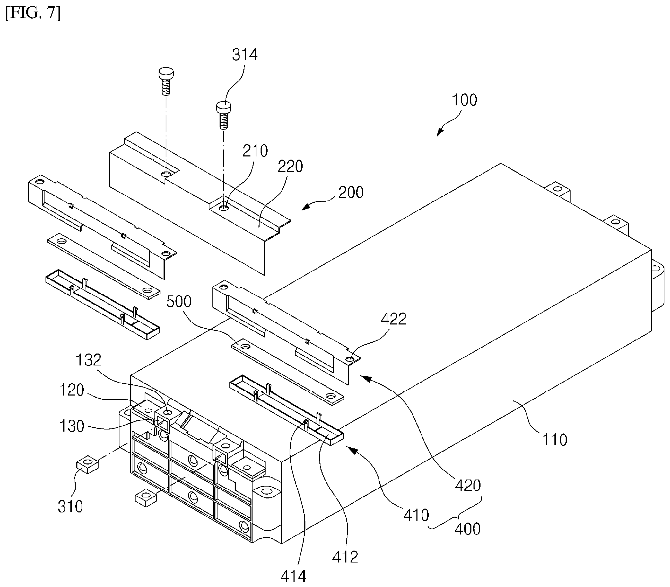

By protecting the high-voltage terminals 120 and the busbar 500 of the battery module 100 with a flame-retardant cover, the second embodiment of the present invention enables more effective thermal propagation prevention to be realized. FIG. 6 is a drawing of a busbar cover 400 provided in a second embodiment of the present invention, and FIG. 7 is a drawing of a structure in which the busbar cover 400 is mounted to the battery module 100.

Referring to the drawings, the battery module 100 includes a busbar 500 and a busbar cover 400 that encloses the entirety of the busbar 500, with both ends of the busbar 500 protected by the busbar cover 400 being electrically coupled to each other by being mechanically fixed to high-voltage terminals 120 of an adjacent module housing 110.

Here, the busbar cover 400 is a two-piece consisting of a lower busbar cover 410 and upper busbar cover 420. The lower busbar cover 410 is a substructure that supports and seats the bottom surface of the busbar 500, and includes a connection hole 412 that exposes the busbar 500 to the high-voltage terminals 120 of the module housing 110. The upper busbar cover 420 is a superstructure coupled to the lower busbar cover 410 to enclose the busbar 500, and includes cover fastening holes 422 corresponding to the module lifting holes 132.

Since the busbar cover 400 is configured to wrap around the entire busbar 500, the busbar 500 is assembled to the module housing 110 in the order of seating the busbar 500 on the lower busbar cover 410, fixing the busbar 500 to the high-voltage terminal 120 through the connection hole 412 of the lower busbar cover 410, and then coupling the upper busbar cover 420. In this regard, it may be desirable from an assembly standpoint to configure the lower busbar cover 410 and the upper busbar cover 420 to be coupled to each other in a one-touch manner by means of a hook 414 structure.

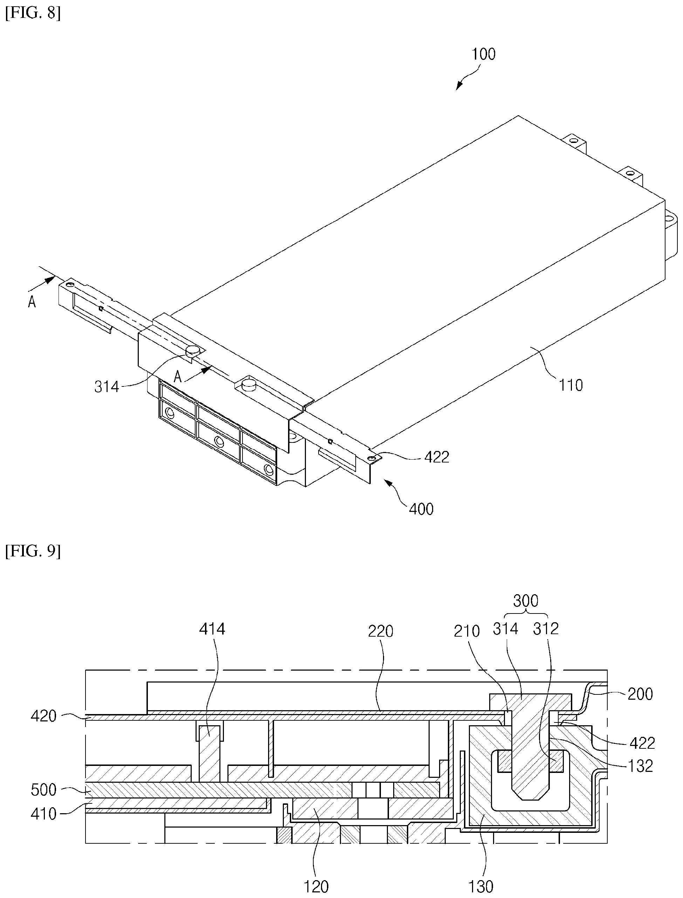

FIG. 8 is a drawing illustrating a battery module 100 including a thermal barrier 200 and a busbar cover 400, and FIG. 9 is a cross-sectional view cut through line "A-A" in FIG. 8. The busbar cover 400 is coupled to a pair of high-voltage terminals 120 one by one, and extends to a length that can be connected to the high-voltage terminals 120 of an adjacent battery module 100. In addition, the thermal barrier 200 then couples over the busbar cover 400 to wrap around it. By this double covering of the high-voltage terminals 120, the outward discharge of the ejecta is further prevented for the battery module 100 experiencing thermal runaway, and the inflow of the ejecta is further inhibited for other neighboring battery modules 100.

And, in the second embodiment, the fixation of the busbar cover 400 and the thermal barrier 200 is done simultaneously. In other words, both the busbar cover 400 and the thermal barrier 200 are fixed together for the same module lifting hole 132 of the module housing 110. Referring to FIG. 9, the fastening member 300 is fastened to the module lifting hole 132 through the fastening hole 210 of the thermal barrier 200 and the cover fastening hole 422 of the busbar cover 400. Since the busbar cover 400 and the thermal barrier 200 can be fixed at once with a single fastening member 300, the assembly process is improved and the number of parts is reduced, which helps to improve cost.

Furthermore, in the busbar cover 400, the storing space of the busbar 500 and the fixing position of the busbar cover 400 are separated from each other. That is, the cover fastening hole 422 of the upper busbar cover 420 is not connected to the storing space of the busbar 500, thereby ensuring sealing of the high-voltage terminal 120.

The fastening member 300 in the second embodiment, as in the first embodiment, may be a nut 310 inserted into the interior of the module lifting rib 130, a bolt 314 screwed into the nut 310 through the fastening hole 210, the cover fastening hole 422, and the module lifting hole 132, or a rivet 320 installed through the fastening hole 210, the cover fastening hole 422, and the module lifting hole 132. However, with the upper busbar cover 420 interposed between the thermal barrier 200 and the module lifting holes 132, there is less need for additional washers 312 to prevent loosening of the screws. It is also possible to apply heat-resistant silicone 330 to the contact surface of the thermal barrier 200 and the module housing 110 for additional assembly rigidity of the thermal barrier 200.

FIG. 10 is a drawing illustrating another exemplary embodiment of the thermal barrier 200. Referring to FIG. 10, rivet 320 as a fastening member 300 and heat-resistant silicone 330 for additional assembly rigidity are shown. Further, the thermal barrier 200 shown in FIGS. 7 through 10 has a concave stepped surface 220 formed around the fastening hole 210. The stepped surface 220 of the thermal barrier 200 may be sized to correspond to the step that the module lifting ribs 130 make with respect to the upper surface of the module housing 110. Such a stepped surface 220 of the thermal barrier 200 may reduce the gap between the thermal barrier 200 and the high-voltage terminal 120, which may improve the protection around the high-voltage terminal 120.

The present invention has been described in more detail above with reference to the drawings and embodiments. However, it is to be understood that the configurations shown in the drawings or embodiments described herein are only one embodiment of the invention which is defined by the claims.

### [Reference numerals]

10: BATTERY PACK
12: PACK CASE
14: CENTER FRAME
100: BATTERY MODULE
110: MODULE HOUSING
120: HIGH-VOLTAGE TERMINAL
130: MODULE LIFTING RIB
132: MODULE LIFTING HOLE
200: THERMAL BARRIER
210: FASTENING HOLE
220: STEPPED SURFACE
300: FASTENING MEMBER
310: NUT 312: WASHER
314: BOLT
320: RIVET
330: HEAT-RESISTANT SILICONE
400: BUSBAR COVER
410: LOWER BUSBAR COVER
412: CONNECTION HOLE
414: HOOK
420: UPPER BUSBAR COVER
422: COVER FASTENING HOLE
500: BUSBAR

## Claims

1. A battery module (100) comprising:
a module housing (110) accommodating a plurality of battery cells;
a pair of high-voltage terminals (120) provided on a front of the module housing (110);
a pair of module lifting holes (132) provided between the pair of high-voltage terminals (120);
a thermal barrier (200) that wraps around part of the front of the module housing (110) including the pair of high-voltage terminals (120), with a pair of fastening holes (210) penetrating through an upper surface of the thermal barrier (200); and
a pair of fastening members (300) respectively penetrating through the pair of module lifting holes (132) and pair of fastening holes (210) to secure the thermal barrier (200) to the module housing (110);
wherein the pair of module lifting holes (132) are formed on an upper surface of a pair of module lifting ribs (130) that each create an open space on the front of the module housing (110), while forming a step relative to an upper surface of the module housing (110);
wherein each fastening (300) member comprises:
a nut (310) inserted inside a respective module lifting rib (130),
a washer (312) placed on the upper surface of the respective module lifting rib (130), and
a bolt (314) that screws into the nut (310) through the respective fastening hole (210) in the thermal barrier (200), the washer (312), and the respective module lifting hole (132);
**characterized in that** the nut (310) is installed inside the respective module lifting rib (130) in a manner that prevents it from rotating with the rotation of the bolt (314).

2. The battery module (100) of claim 1, wherein the thermal barrier (200) forms a bent shape that wraps around an upper surface and a front surface of the pair of high-voltage terminals (120).

3. The battery module (100) of claim 2, wherein a width of the thermal barrier (200) corresponds to a front width of the module housing (110).

4. The battery module (100) of claim 1, wherein a heat-resistant silicone is applied to a contact surface between the thermal barrier (200) and the module housing (110).

5. The battery module (100) of claim 2, further comprising:
a busbar (500), and a busbar cover (400) that wraps around the busbar (500),
wherein ends of the busbar (500) are mechanically fixed to the pair of high-voltage terminals (120) of adjacent module housing (110), respectively.

6. The battery module (100) of claim 5, wherein the busbar cover (400) comprises:
a lower busbar cover (410) in which the busbar (500) is seated, and is provided with a connection hole (412) exposing the busbar (500) to the pair of high-voltage terminals (120); and
an upper busbar cover (420) for wrapping around the busbar (500) in combination with the lower busbar cover (410), and is provided with a pair of cover fastening holes (422) corresponding to the pair of module lifting holes (132).

7. The battery module (100) of claim 6, wherein the lower busbar cover (410) and the upper busbar cover (420) are mutually coupled by a hook (414) structure.

8. The battery module (100) of claim 6, wherein the thermal barrier (200) wraps around the busbar cover (400).

9. The battery module (100) of claim 8, wherein each fastening member (300) is fastened to a respective module lifting hole (132) through a respective fastening hole (210) in the thermal barrier (200) and a respective cover fastening hole (422) in the busbar cover (400).

10. The battery module (100) of claim 9, wherein each fastening member (300) is a nut (310) inserted into the interior of a respective module lifting rib (130), and a bolt (314) threaded to the nut (310) through the respective fastening hole (210) in the thermal barrier (200), through the respective cover fastening hole (422), and through the respective module lifting hole (132).

11. The battery module (100) of claim 2, wherein around each of the pair of fastening holes (210) in the thermal barrier (200), a concave stepped surface (220) is formed corresponding to the step formed by a respective one of the pair of module lifting ribs (130) relative to the upper surface of the module housing (110).

## Patentansprüche

1. Batteriemodul (100), umfassend: ein Modulgehäuse (110), das eine Vielzahl von Batteriezellen aufnimmt; ein Paar Hochspannungsanschlüsse (120), die an einer Vorderseite des Modulgehäuses (110) vorgesehen sind; ein Paar Modulhebelöcher (132), die zwischen dem Paar Hochspannungsanschlüsse (120) vorgesehen sind; eine Wärmesperre (200), die einen Teil der Vorderseite des Modulgehäuses (110) einschließlich des Paars Hochspannungsanschlüsse (120) umhüllt, wobei ein Paar Befestigungslöcher (210) eine obere Oberfläche der Wärmesperre (200) durchdringen; und ein Paar Befestigungselemente (300), die jeweils das Paar Modulhebelöcher (132) und das Paar Befestigungslöcher (210) durchdringen, um die Wärmesperre (200) an dem Modulgehäuse (110) zu sichern; wobei das Paar Modulhebelöcher (132) auf einer oberen Oberfläche eines Paars Modulheberippen (130) ausgebildet ist, die jeweils einen offenen Raum an der Vorderseite des Modulgehäuses (110) schaffen, während sie eine Stufe relativ zu einer oberen Oberfläche des Modulgehäuses (110) bilden; wobei jedes Befestigungselement (300) umfasst: eine Mutter (310), die im Inneren einer jeweiligen Modulheberippe (130) eingesetzt ist, eine Unterlegscheibe (312), die auf der oberen Oberfläche der jeweiligen Modulheberippe (130) platziert ist, und einen Bolzen (314), der durch das jeweilige Befestigungsloch (210) in der Wärmesperre (200), die Unterlegscheibe (312) und das jeweilige Modulhebeloch (132) in die Mutter (310) geschraubt wird; **dadurch gekennzeichnet, dass** die Mutter (310) im Inneren der jeweiligen Modulheberippe (130) so installiert ist, dass sie an einer Drehung mit der Drehung des Bolzens (314) gehindert wird.

2. Batteriemodul (100) nach Anspruch 1, wobei die Wärmesperre (200) eine gebogene Form bildet, die eine obere Oberfläche und eine vordere Oberfläche des Paars Hochspannungsanschlüsse (120) umhüllt.

3. Batteriemodul (100) nach Anspruch 2, wobei eine Breite der Wärmesperre (200) einer vorderen Breite des Modulgehäuses (110) entspricht.

4. Batteriemodul (100) nach Anspruch 1, wobei ein hitzebeständiges Silikon auf eine Kontaktfläche zwischen der Wärmesperre (200) und dem Modulgehäuse (110) aufgebracht ist.

5. Batteriemodul (100) nach Anspruch 2, ferner umfassend: eine Stromschiene (500) und eine Stromschienenabdeckung (400), die die Stromschiene (500) umhüllt, wobei Enden der Stromschiene (500) jeweils mechanisch an dem Paar Hochspannungsanschlüsse (120) eines benachbarten Modulgehäuses (110) befestigt sind.

6. Batteriemodul (100) nach Anspruch 5, wobei die Stromschienenabdeckung (400) umfasst: eine untere Stromschienenabdeckung (410), in der die Stromschiene (500) sitzt und die mit einem Verbindungsloch (412) versehen ist, das die Stromschiene (500) zu dem Paar Hochspannungsanschlüsse (120) freilegt; und eine obere Stromschienenabdeckung (420), die in Kombination mit der unteren Stromschienenabdeckung (410) die Stromschiene (500) umhüllt und mit einem Paar Abdeckungsbefestigungslöcher (422) versehen ist, die dem Paar Modulhebelöcher (132) entsprechen.

7. Batteriemodul (100) nach Anspruch 6, wobei die untere Stromschienenabdeckung (410) und die obere Stromschienenabdeckung (420) durch eine Hakenstruktur (414) miteinander gekoppelt sind.

8. Batteriemodul (100) nach Anspruch 6, wobei die Wärmesperre (200) die Stromschienenabdeckung (400) umhüllt.

9. Batteriemodul (100) nach Anspruch 8, wobei jedes Befestigungselement (300) an einem jeweiligen Modulhebeloch (132) durch ein jeweiliges Befestigungsloch (210) in der Wärmesperre (200) und ein jeweiliges Abdeckungsbefestigungsloch (422) in der Stromschienenabdeckung (400) befestigt ist.

10. Batteriemodul (100) nach Anspruch 9, wobei jedes Befestigungselement (300) eine Mutter (310) ist, die in das Innere einer jeweiligen Modulheberippe (130) eingesetzt ist, und ein Bolzen (314), der durch das jeweilige Befestigungsloch (210) in der Wärmesperre (200), durch das jeweilige Abdeckungsbefestigungsloch (422) und durch das jeweilige Modulhebeloch (132) mit der Mutter (310) verschraubt ist.

11. Batteriemodul (100) nach Anspruch 2, wobei um jedes des Paars Befestigungslöcher (210) in der Wärmesperre (200) eine konkave abgestufte Oberfläche (220) ausgebildet ist, die der Stufe entspricht, die durch eine jeweilige des Paars Modulheberippen (130) relativ zur oberen Oberfläche des Modulgehäuses (110) gebildet wird.

## Revendications

1. Module de batterie (100) comprenant : un boîtier de module (110) logeant une pluralité de cellules de batterie ; une paire de bornes haute tension (120) prévues sur une partie avant du boîtier de module (110) ; une paire de trous de levage de module (132) prévus entre la paire de bornes haute tension (120) ; une barrière thermique (200) qui s'enroule autour d'une partie de l'avant du boîtier de module (110) incluant la paire de bornes haute tension (120), avec une paire de trous de fixation (210) pénétrant à travers une surface supérieure de la barrière thermique (200) ; et une paire d'éléments de fixation (300) pénétrant respectivement à travers la paire de trous de levage de module (132) et la paire de trous de fixation (210) pour fixer la barrière thermique (200) au boîtier de module (110) ; dans lequel la paire de trous de levage de module (132) est formée sur une surface supérieure d'une paire de nervures de levage de module (130) qui créent chacune un espace ouvert sur l'avant du boîtier de module (110), tout en formant un gradin par rapport à une surface supérieure du boîtier de module (110) ; dans lequel chaque élément de fixation (300) comprend : un écrou (310) inséré à l'intérieur d'une nervure de levage de module (130) respective, une rondelle (312) placée sur la surface supérieure de la nervure de levage de module (130) respective, et un boulon (314) qui se visse dans l'écrou (310) à travers le trou de fixation (210) respectif dans la barrière thermique (200), la rondelle (312), et le trou de levage de module (132) respectif ; **caractérisé en ce que** l'écrou (310) est installé à l'intérieur de la nervure de levage de module (130) respective d'une manière qui l'empêche de tourner avec la rotation du boulon (314).

2. Module de batterie (100) selon la revendication 1, dans lequel la barrière thermique (200) forme une forme courbée qui s'enroule autour d'une surface supérieure et d'une surface avant de la paire de bornes haute tension (120).

3. Module de batterie (100) selon la revendication 2, dans lequel une largeur de la barrière thermique (200) correspond à une largeur avant du boîtier de module (110).

4. Module de batterie (100) selon la revendication 1, dans lequel un silicone thermorésistant est appliqué sur une surface de contact entre la barrière thermique (200) et le boîtier de module (110).

5. Module de batterie (100) selon la revendication 2, comprenant en outre : une barre omnibus (500), et un couvercle de barre omnibus (400) qui s'enroule autour de la barre omnibus (500), dans lequel les extrémités de la barre omnibus (500) sont fixées mécaniquement à la paire de bornes haute tension (120) d'un boîtier de module (110) adjacent, respectivement.

6. Module de batterie (100) selon la revendication 5, dans lequel le couvercle de barre omnibus (400) comprend : un couvercle de barre omnibus inférieur (410) dans lequel la barre omnibus (500) est logée, et qui est pourvu d'un trou de connexion (412) exposant la barre omnibus (500) à la paire de bornes haute tension (120) ; et un couvercle de barre omnibus supérieur (420) pour enrouler autour de la barre omnibus (500) en combinaison avec le couvercle de barre omnibus inférieur (410), et qui est pourvu d'une paire de trous de fixation de couvercle (422) correspondant à la paire de trous de levage de module (132).

7. Module de batterie (100) selon la revendication 6, dans lequel le couvercle de barre omnibus inférieur (410) et le couvercle de barre omnibus supérieur (420) sont mutuellement couplés par une structure à crochet (414).

8. Module de batterie (100) selon la revendication 6, dans lequel la barrière thermique (200) s'enroule autour du couvercle de barre omnibus (400).

9. Module de batterie (100) selon la revendication 8, dans lequel chaque élément de fixation (300) est fixé à un trou de levage de module (132) respectif à travers un trou de fixation (210) respectif dans la barrière thermique (200) et un trou de fixation de couvercle (422) respectif dans le couvercle de barre omnibus (400).

10. Module de batterie (100) selon la revendication 9, dans lequel chaque élément de fixation (300) est un écrou (310) inséré à l'intérieur d'une nervure de levage de module (130) respective, et un boulon (314) vissé sur l'écrou (310) à travers le trou de fixation (210) respectif dans la barrière thermique (200), à travers le trou de fixation de couvercle (422) respectif, et à travers le trou de levage de module (132) respectif.

11. Module de batterie (100) selon la revendication 2, dans lequel autour de chacun de la paire de trous de fixation (210) dans la barrière thermique (200), une surface étagée concave (220) est formée, correspondant au gradin formé par l'une respective de la paire de nervures de levage de module (130) par rapport à la surface supérieure du boîtier de module (110).
